# EUROPEAN PATENT SPECIFICATION

(11) **EP 0 875 147 B1**
(45) Date of publication and mention of the grant of the patent: **26.06.2002**
(21) Application number: 97117139.2
(22) Date of filing: 02.10.1997
(51) Int. Cl.: A21C 1/02

(54) **Apparatus for preparing dough for bread**
Vorrichtung zum Vorbereiten von Brotteig
Dispositif pour préparer des pâtes pour faire du pain

(30) Priority: 30.04.1997 JP 12794197
(43) Date of publication of application: 04.11.1998
(73) Proprietor: Yugen Kaisha Nakai, Shijyonawate-shi, Osaka-Fu (JP)
(72) Inventor: Nakai, Akio, Katano-shi, Osaka-Fu (JP)
(74) Representative: Weisert, Annekäte, Dipl.-Ing. Dr.-Ing.

(56) References cited:
- FR-A- 389 425
- FR-A- 1 596 953
- US-A- 2 600 117
- PATENT ABSTRACTS OF JAPAN vol. 017, no. 482 (C-1105), 2 September 1993 (1993-09-02) & JP 05 123096 A (NAKAI:KK), 21 May 1993 (1993-05-21)
- PATENT ABSTRACTS OF JAPAN vol. 1996, no. 03, 29 March 1996 (1996-03-29) & JP 07 289185 A (KAZUHIKO ODA), 7 November 1995 (1995-11-07)

## Description

### BACKGROUND OF THE INVENTION

Generally, when water is added to wheat flour, the protein absorbs the water to become hydrated. The hydrated and dissolved protein is extracted from the wheat flour particles, with the gliadin and glutenin reacting with each other to form a viscoelastic gluten film (a network structure with S-S cross linking) . This is also true with Japanese noodles and Chinese noodles, and the mixing and kneading of dough is effected in order to develop gluten formation.

The gluten contained in dough for bread, unlike said Japanese noodles and Chinese noodles, has to support bubbles of carbon dioxide evolved due to yeast and has to uniformly expand in all directions. That is, in order to form bread of good quality which has expanded into an effective volume, it is necessary that as the volume of carbon dioxide confined in cells mainly of gluten increases, the film enclosing said carbon dioxide extend or spread as if it were a rubber balloon.

Supposing that the gluten film is rigid and hardly extensible, it would be unable to withstand the inner pressure of said carbon dioxide, so that the bubbles would burst before they sufficiently grow large, resulting in adjacent bubbles joining together. Reversely, if the gluten film is soft and has too much extensibility, it becomes difficult to confine and maintain the carbon dioxide. At any rate, if the carbon dioxide leaks out before the baking of bread is completed with the protein particles gelatinized to fix the bread structure, the bread volume fails to grow as large as expected, the inner texture of the bread becoming rough; thus, it is impossible to obtain a product of good quality.

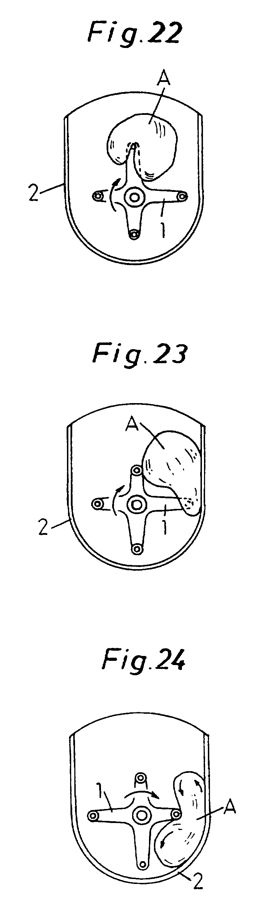

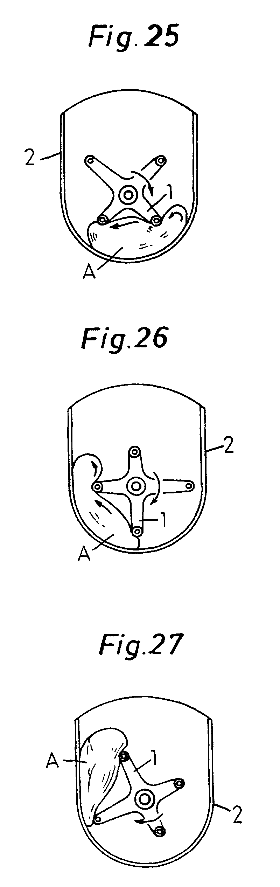

In this connection, in bakeries, the mixing and kneading of dough has heretofore been practiced by using a mixer. As for such mixer, various types, vertical and horizontal, are known in the art, a typical one being shown in Figs. 22 through 27, comprising an agitator 1, such as horizontal bars, pins, hooks, double arm or propeller, which stirs dough A consisting of a mixture of wheat flour, table salt, yeast and other necessary ingredients and water, thus applying lifting, compressing, stretching, beating and other actions for plastic deformation to the dough A between the agitator 1 and the inner wall of the container 2, thereby finishing the dough suitable for bread.

With such bread dough preparing apparatus, however, firstly, in the early stage starting with adding water to wheat flour (extra-strength flour) and ending in the dough A being lumped into a large mass, when a strong gluten bond is formed, this contrarily prevents uniform dispersion of the material, thus making it necessary to reduce the rotary speed of the agitator 1. This is because the agitator 1 is used indiscriminately both for hydration and mixing of the dough A and for the subsequent kneading; the net result is that it takes a long time for preparation.

Secondly, after the dough A has been lumped into a large mass, the agitator 1 applies kneading to the dough A, but the amount of the dough A is too small to receive an effective kneading action. Further, during the kneading, the bars, pins, hooks or propeller of the agitator penetrates into the dough to stir the latter, tending to break the gluten network structure. And the broken S-S bond is hard to cross-link again, thus lowering the strength of the dough A, resulting in the so-called overoxidation.

Thirdly, since the dough A is rotated concomitantly with the agitator 1, it is difficult to quickly and uniformly knead the dough in its entirety. Even so, if the agitator 1 is rotated at higher speed, this leads to breakage of the gluten network structure and breakdown of the dough for bread, a further problem being that generation of heat by friction and resultant heating of the dough for bread tend to cause thermal deactivation of the yeast.

As a solution to such problems, I have previously proposed Japanese Patent Kokai Hei 5-123096, which was registered as Patent No. 2631430 on May 25, 1997. As I continued my earnest study even during implementation of said Patent, I have found the following problem remains to be solved.

In this known invention, the pestle 30 is only lifted and lowered through crank motion with respect to dough for bread which is being rotated by the mortar 31, said pestle 30 not being designed to be freely rotated such that when the pestle 30 is lowered, it is rotated concomitantly with the bread dough nipped between the pestle 30 and the mortar 31.

Therefore, there would be the danger of the pestle 30 exerting a pressure as it is repetitively lowered to thrust the dough each time, said pressure producing a force which rubs off the bread dough, thus breaking the gluten network structure in the bread dough. Also, the pressure exerted by the pestle 3 would act as a friction force which uselessly heats the bread dough, which heating is liable to cause thermal deactivation of the yeast.

Thus, in said known patent, the vertical relative spacing between the lower surface of the pestle 30 lowered and the inner bottom surface (fluoride resin sheet 44) of the rotary support bowl 31b or the rotary support dish 47 is designed as large as about 10 - 15 mm. Then, the pressure exerted by the pestle 30 on the bread dough is lessened, a fact which, coupled with the fact that a large mass M2 of bread dough tends to run idle relative to the mortar 31, makes it impossible to efficiently apply the overturning action of a dough overturning blade 45 to the whole of the bread dough; thus, the kneading operation takes a long time.

Further, in the case of the bread dough, unlike dough for rice cake (dry confectionery) having no water added thereto during kneading or dough for Japanese noodles and Chinese noodles which absorb water by being cooked (being put in boiling water) subsequent to kneading, the amount of water added is normally as large as about 60% or more by weight based on the amount of the wheat flour (incidentally, that for dough for Japanese noodles is about 60% by weight at most), so that in the early stage of kneading, the dough is, as it were, water-soaked, and is hardly viscoelastically deformed. As a result, the bread dough does not leave the lowered pestle 30, tending to remain stuck or heaped thereon for ever.

Accordingly, said known invention is arranged to prevent bread dough from sticking to the pestle 30 by putting a smaller amount of water than in the case of skilled baker's hand-made dough for bread or by brushing a releasing solvent solution or spraying a releasing solution over the pestle 30. However, these methods each form a hindrance to obtaining bread dough of good quality, and since the amount of water to be put has to be inevitably reduced, it is impossible to mechanically produce bread dough of high yield.

### SUMMARY OF THE INVENTION

The present invention is designed to further improve such situation and is directed solely to an apparatus for preparing dough for bread comprising a mortar adapted to be driven for rotation in its entirety or partly at its lower portion, a resistance vane opposed to the interior of said mortar to overturn dough, and a pestle lifting shaft adapted to be moved through crank motion by a given stroke toward the pestle, and the invention provides, firstly, an arrangement wherein the pestle for kneading dough received in said mortar is loosely fitted for rotation on the lower portion of the pestle lifting shaft through a bearing, so that when the pestle is lowered, it is rotated concomitantly with the dough nipped between the pestle and the mortar thereunder, thereby preventing the pestle from destroying the gluten network structure as if rubbing off the dough or from uselessly rubbing and heating the dough to the extent of causing thermal deactivation of the yeast, thereby ensuring obtainment of bread dough of good quality which is expanded and highly viscoelastic like a rubber balloon.

Secondly, it provides an arrangement wherein the vertical relative spacing between the lowered pestle and the mortar is as short as about 10 mm at most, thereby increasing the pressure exerted by the pestle on the dough sufficiently to efficiently knead a given unit amount of bread dough in a short time, thus achieving the economies of volume production to the full.

In that case, even if the vertical relative spacing is set to as small a value as about 10 mm or less, the pestle, when lowered, is freely rotated concomitantly with the dough; therefore, the powerful pressing force does not work as a rubbing force or friction force on the dough, such rubbing force of friction force being allowed to escape, thus not hindering the achievement of the first object, of course.

Thirdly, it provides an arrangement wherein the pestle is in the form of an assembly comprising a bearing case inseparably fitted to the lower end of the pestle lifting shaft, and a barrel sleeve of substantially U-shaped cross section fixed to the bearing case from below so as to enclose the lower end of said pestle lifting shaft, with a radial bearing and a thrust bearing interposed between the fitting surfaces of the pestle lifting shaft and the bearing case, thereby stably and reasonably supporting the thrust load on said pestle to increase the durability of the pestle, while integrally forming the entire surface of said barrel sleeve with a fluoride resin coating film serving as a release agent for the dough, thereby eliminating the danger of the dough sticking to the pestle.

Fourthly, it provides an arrangement wherein the inner bottom surface of the mortar has a fluoride resin sheet fixed to the central area thereof and the inner wall surface of the mortar is roughened by application of surface irregularities and so is the dough overturning surface of a dough overturning resistance vane opposed to the interior of the mortar, thereby preventing the dough from sticking thereto, said mortar having a plurality of dough slip preventing ridges extending in an overall radially symmetrically distributed pattern from the peripheral area of the inner bottom surface thereof, thereby preventing the dough from running idle rotating relative to the mortar, thus ensuring that every part of the dough is subjected to the dough overturning action of said resistance vane and the kneading action of the mortar, thereby efficiently obtaining bread dough which is in a uniformly and excellently kneaded state.

Other objects will become apparent from a detailed description to be given of preferred embodiments of the present invention.

### BRIEF DESCRIPTION OF THE DRAWINGS

Fig. 1 is a side view showing the whole of a bread dough preparing apparatus according to the present invention;
Fig. 2 is a rear view of Fig. 1;
Fig. 3 is a complete side view showing the lifted state of a bread dough pounding pestle;
Fig. 4 is an enlarged sectional view of a portion extracted from Fig. 1;
Fig. 5 is an enlarged sectional view taken along the line 5-5 in Fig. 4;
Fig. 6 is a front view of Fig. 5;
Fig. 7 is an enlarged sectional view showing how the pestle is attached to a pestle lifting shaft;
Fig. 8 is a sectional view taken along the line 8-8 in Fig. 7;
Fig. 9 is a sectional view showing how the mortar is attached;
Fig. 10 is a sectional view showing part of Fig. 9 enlarged;
Fig. 11 is a plan view of a support structure extracted from Fig. 9;
Fig. 12 is a plan view of a lower rotary support bowl for the mortar also extracted;
Fig. 13 is a sectional view showing how a dough overturning resistance vane is attached;
Fig. 14 is a sectional view taken along the line 14-14 in Fig. 13;
Fig. 15 is a perspective view of the resistance vane extracted;
Fig. 16 is a sectional view corresponding to Fig. 9 but showing a modified embodiment of a mortar;
Fig. 17 is an explanatory view illustrative of hydration and mixing applied to bread dough;
Fig. 18 is an explanatory view showing bread dough formed into small masses;
Fig. 19 is an explanatory view showing a large lumped mass;
Fig. 20 is an explanatory view showing how bread dough is kneaded;
Fig. 21 is a plan view showing actions of Fig. 20; and
Figs. 22 through 27 are explanatory views showing a bread dough kneading process using a conventional mixer.

### DESCRIPTION OF THE PREFERRED EMBODIMENTS

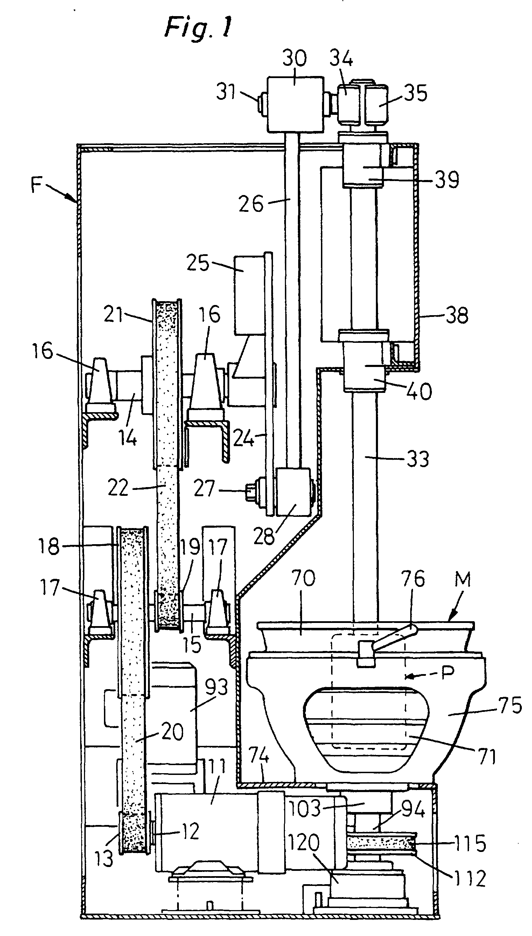

The invention will now be described in more detail with reference to the drawings. Figs. 1 through 3 show the whole of a bread dough preparing apparatus according to the invention, wherein F denotes an installation machine frame on a working floor, and 11 denotes a pestle driving motor housed in the machine frame F and horizontally installed in a lower position, with its output shaft 12 having a drive pulley 13 integrally fitted thereon. The numerals 14 and 15 denote a driven shaft and an intermediate shaft extending in parallel with the output shaft 12 of said pestle driving motor 11 and disposed horizontal in upper and intermediate positions in the machine frame F, each shaft being rotatably supported in a pair of opposed pillow blocks 16, 17.

The numerals 18 and 19 denote first and second intermediate pulleys, large and small in diameter, mounted side by side for integral rotation on said intermediate shaft 15, said first intermediate pulley 18 being connected to said small-diametered drive pulley 13 through a first transmission belt 20, wherein primary speed reduction is effected.

The numeral 21 denotes a large-diametered driven pulley fitted for integral rotation on the upper driven shaft 14, with a second transmission belt 22 entrained around said pulley 21 and said second small-diametered intermediate pulley 19 on the intermediate shaft 15, thereby achieving secondary speed reduction. The numeral 23 denotes a belt tensioner comprising a screw rod for advancing and retracting the associated pillow block 17 on said intermediate shaft 15.

Further, the numeral 24 denotes a flywheel fitted for integral rotation on one end of said driven shaft 14, with a crescent weight 25 attached to the periphery thereof which is larger in diameter than the driven pulley 21.

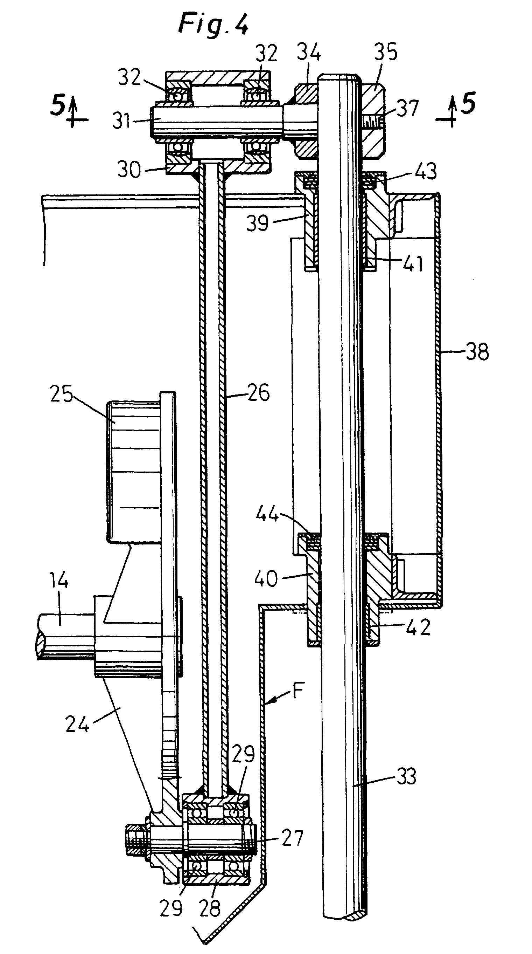

The numeral 26 denotes a crank arm pivotally connected to the flywheel 24 by a horizontal pivot shaft 27 at a position on its periphery which is diametrically opposite to the weight 25, said crank arm, as is clear from Fig. 4, being formed of light-weight metal pipe and moved up and down through a given stroke as said flywheel 24 is rotated. The numeral 28 denotes a bearing case fixed on the lower end of the crank arm 26 and having thrust bearings 29 for said pivot shaft 27 juxtaposed therein.

The numeral 30 denotes a bearing case fixed on the upper end of the crank arm 26 and having radial bearings 32 juxtaposed therein for supporting a horizontal pivot shaft 31 extending through said bearing case 30.

Furthermore, mounted on one end of the pivot shaft 31 are split clamp elements 34 and 35 for connecting the upper end of a pestle lifting shaft 33, said elements being adapted to be loosened to adjust the attachment height of the pestle lifting shaft 33, whereupon said elements are tightened again.

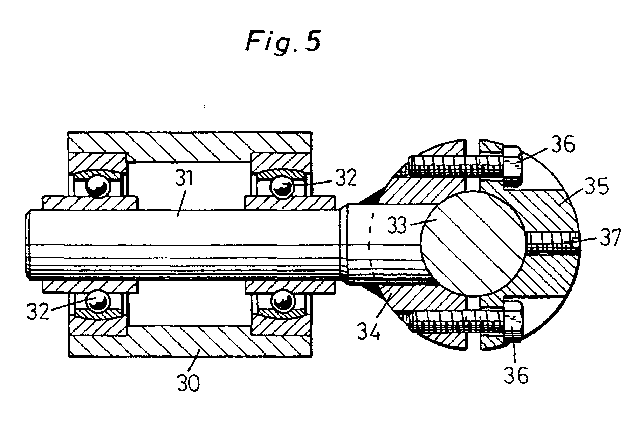

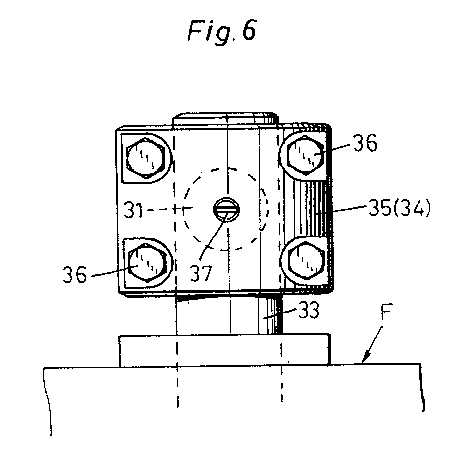

More particularly, as is clear from Figs. 4 through 6, one of the split clamp elements 34 and 35 is a support element 34 fixed on one end of the pivot shaft 31, and the other is a separate keep element 35, the arrangement being such that the upper end of the pestle lifting shaft 33 is received between the opposed elements and fixed in position by a plurality of juxtaposed fixing bolts 36.

The numeral 37 denotes a positioning bolt which is screwed from the central area of said keep element 35 toward the pestle lifting shaft 33, to thereby temporarily position the pestle lifting shaft 33, whereupon said fixing bolts 36 are tightened; thus, the attachment height of the pestle lifting shaft 33 can be easily and efficiently adjusted.

Said pestle lifting shaft 33 is in an upright state extending through the eaves-like upper box 38 of the machine frame F, with a dough pounding pestle P integrated with the lower end thereof, said pestle being exposed, projecting outside the machine frame F. Further, the pestle lifting shaft 33 is supported at its middle region by the machine frame F through a pair of vertically spaced bearing bushes 39 and 40. The numerals 41 and 42 denote oilless metal inserted between the bearing bushes 39, 40 and the pestle lifting shaft 33, and 43 and 44 denote felt rings impregnated with lubricating oil.

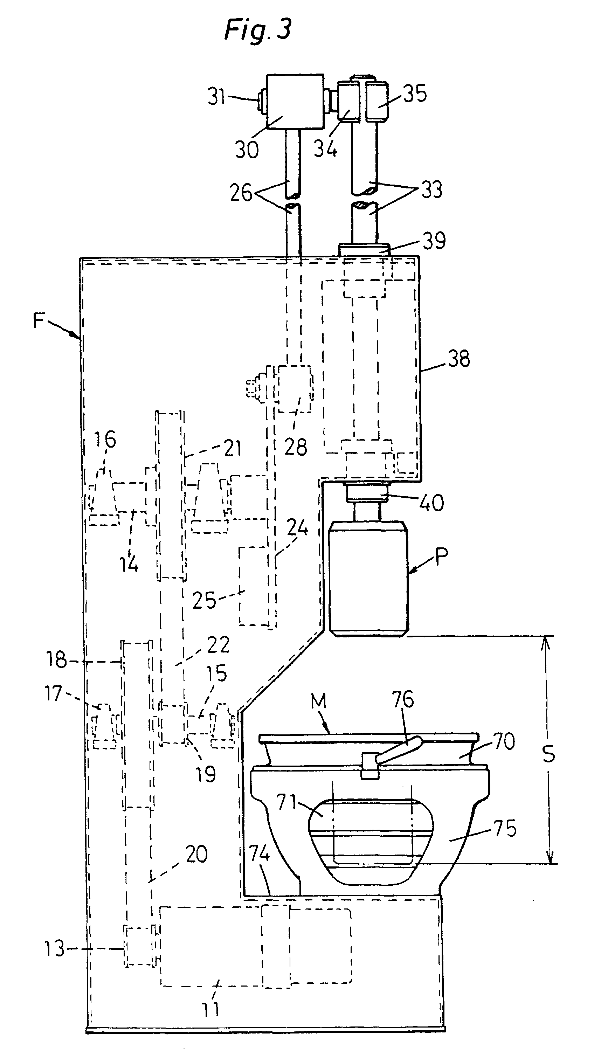

And said pestle P, as is clear from a comparison between Fig. 1 showing the lower dead point and Fig. 3 showing the upper dead point, is capable of being lifted and lowered integrally with the pestle lifting shaft 33 by a given stroke S and, furthermore, said pestle is freely rotatably attached to the lower end of the pestle lifting shaft 33. To this end, the pestle is attached as follows.

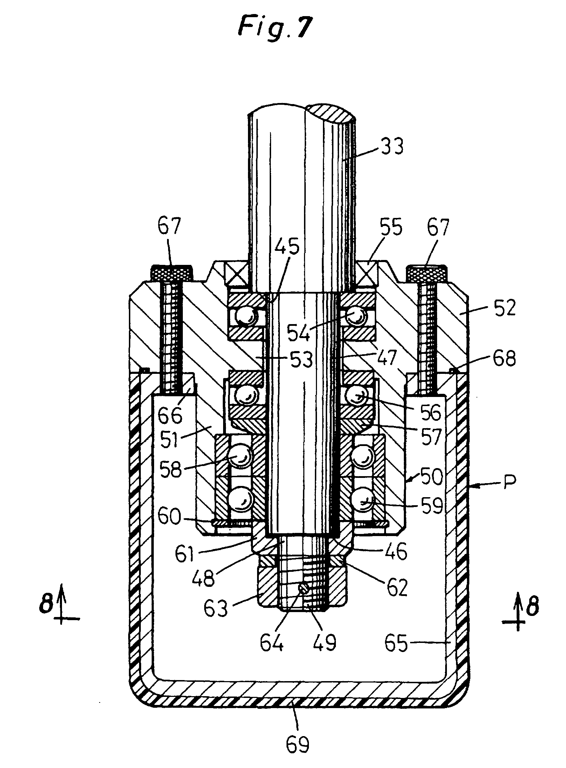

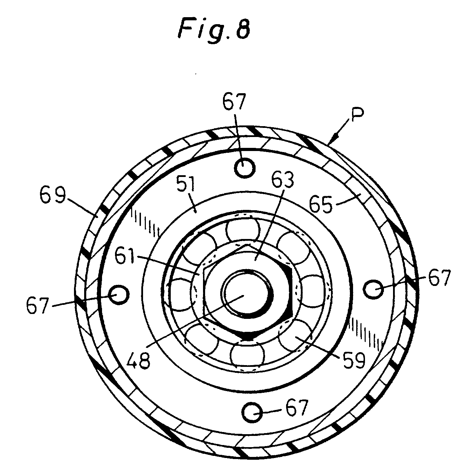

In Figs. 7 and 8 showing the pestle P extracted in its attached state, the numerals 45 and 46 denote a pair of vertically spaced stopping step surfaces formed in the lower end portion of said pestle lifting shaft 33, said lower end portion of the pestle lifting shaft 33 exhibiting a stepped form composed of a small diameter shaft portion 47 and a smallest diameter shaft portion 48 downwardly extending therefrom, said smallest diameter shaft portion 48 being externally threaded as at 49.

The numeral 50 denotes a bearing case fitted from below onto the lower end portion of such pestle lifting shaft 33, having a barrel sleeve 51 with a support flange 52 outwardly extending from the upper end of said barrel sleeve 51 and with a partition flange 53 inwardly extending from an intermediate height position on the barrel sleeve 51.

The numeral 54 denotes a first thrust bearing overlying the partition flange 53 and interposed between the small diameter shaft portion 47 of the pestle lifting shaft 33 and the bearing case 50, and supported at its upper surface by the upper stopping step surface 45 of the pestle lifting shaft 33. The numeral 55 denotes an oil seal interposed between the bearing case 50 and the pestle lifting shaft 33 to seal the upper surface of said first thrust bearing 54.

Further, the numeral 56 denotes a second thrust bearing underlying the partition flange 53 and interposed between the small diameter shaft portion 47 of the pestle lifting shaft 33 and the bearing case 50, and supported at its lower surface by the horizontal flat surface of a distance collar 57.

The numerals 58 and 59 denote first and second radial bearings underlying the distance collar 57 and interposed, in a stacked state, between the small diameter shaft portion 47 of the pestle lifting shaft 33 and the bearing case 50, the upper, first radial bearing 58 being restricted by the conical surface of said distance collar 57. The numeral 60 denotes a snap ring which prevents them from falling off.

The numeral 61 denotes a bearing support cap fitted from below on the smallest diameter shaft portion 48 of the pestle lifting shaft 33; 62 denotes a spring washer fitted thereon from below; 63 denotes a fixing nut threadedly fitted from below on the external thread 49 of said smallest diameter shaft portion 48; and 64 denotes a slip-off preventing pin for said fixing nut 63.

Further, the numeral 65 denotes the barrel sleeve of said pestle P, having a substantially U-shaped cross section surrounding the lower end portion of the pestle lifting shaft 33 and the barrel sleeve 51 of said bearing case 50, with an attachment flange 66 which extends inwardly from the upper end of the barrel sleeve 65 of the pestle P being joined from below to the support flange 52 of said bearing case 50 and integrated with the bearing case 50 by a plurality of through-bolts 67 threadedly applied from above. The numeral 68 denotes an 0-ring for sealing the joined surface.

More particularly, the pestle P consists of an assembly of the barrel sleeve 65 and the bearing case 50 and is loosely fitted for rotation around the vertical axis thereof on the lower end portion of the pestle lifting shaft 33 through said first and second radial bearings 58 and 59, said pestle covering the lower end of said pestle lifting shaft 33.

Furthermore, the entire surface of the barrel sleeve 65 in the pestle P is integrally coated with a fluorine coating film 69 of given thickness serving as dough releasing means, and the outer diameter of the barrel sleeve 65 including the same is, of course, equal to the outer diameter of the support flange 52 in said bearing case 50.

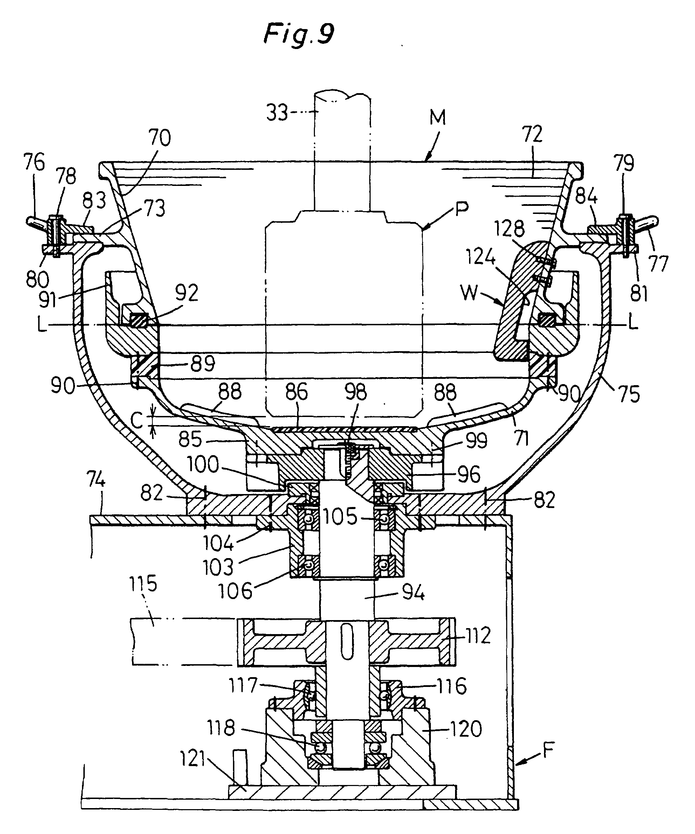

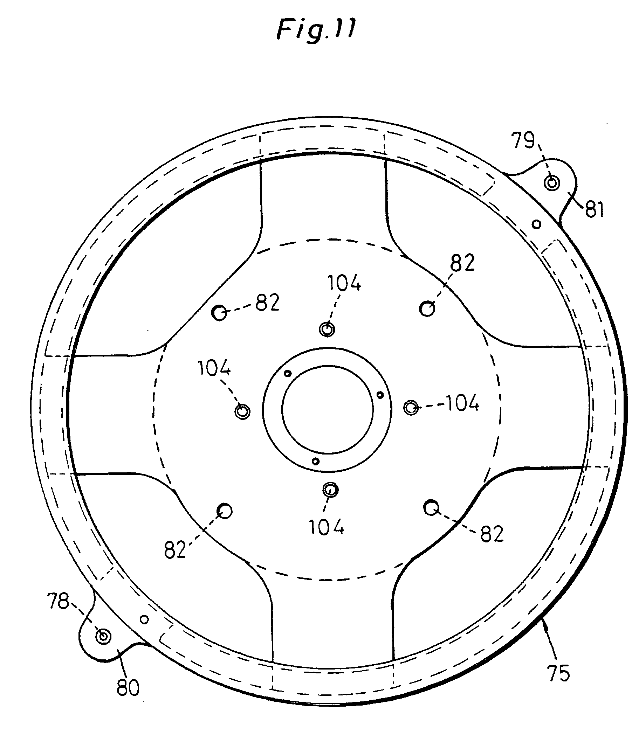

On the other hand, the character M collectively denotes the mortar disposed immediately under the pestle P, as shown in Figs. 9 through 13, comprising an upper fixed ring 70 in the form of a bottomless annulus, and a lower rotary support bowl 71 fitted thereto for communication. The upper fixed ring 70 is funnel-shaped in vertical section, with the entire inner wall surface thereof being an uneven surface having horizontal rail-like surface irregularities 72 and having a surface treatment applied thereto using a fluorine resin coating for release purposes. The releasing surface irregularities 72 have a height difference of about 0.5 mm.

The numeral 73 denotes a horizontal attachment flange outwardly integrally extending from an intermediate height position on the upper fixed ring 70 and fixed, by a pair of opposed manual operating levers 76 and 77, from above under pressure on the upper end of a support structure 75 integrally erected on the upper flat surface of a lower box 74 in the machine frame F as a bowl surrounding the lower rotary support bowl 71. The numerals 78 and 79 denote pivot bolts for pivotally connecting the manual operating levers 76 and 77 to a pair of horizontal ears 82 and 81 integrally extending from said support structure 75, and the numeral 82 denotes a plurality of bolts for connecting from above the lower surface of the support structure 75 to the lower box 74.

The upper fixed ring 70 can be disassembled from the lower rotary support bowl 71 by turning the manual operating levers 76 and 77 around the pivot bolts 78 and 79 through about 90 degrees so as to allow pressers 83 and 84 to clear the attachment flange 73. In addition, though not shown, the lower surface of each of the pressers 83 and 84 is roughened to increase the friction force exerted between it and the attachment flange 73.

The central region of the bottom surface of said lower rotary support bowl 71 is thickened to form a downwardly extending attachment seat disk 85, and a circular fluoride resin plate 86 is integrally fixed to the central region of the inner bottom surface thereof by a plurality of countersunk screws 87. However, this fluoride resin plate 86 may be replaced by a fluoride resin coating of given thickness integrally applied to the inner bottom surface of the lower rotary support bowl 71.

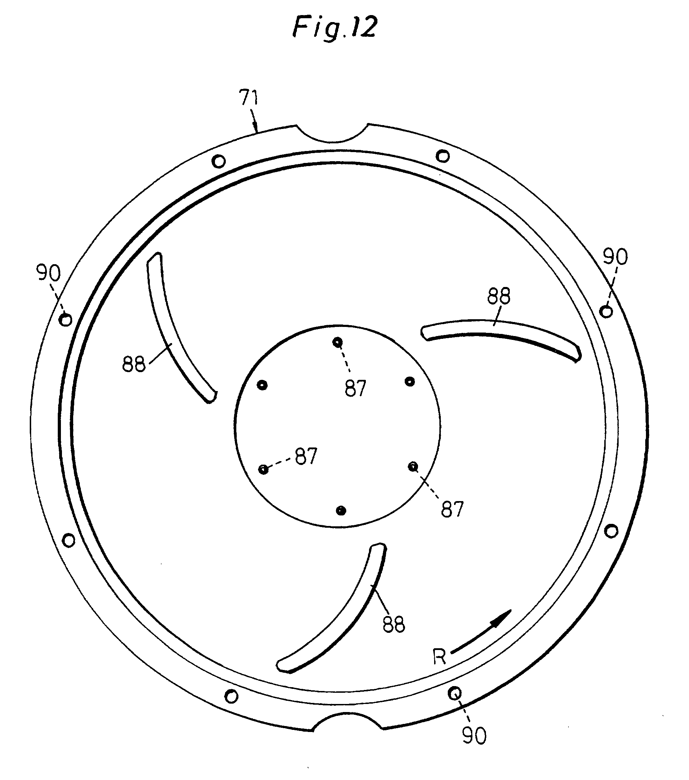

Further, a plurality of dough slippage preventing curved ridges 88 of given length are raised from the peripheral region of the inner bottom surface in a radial symmetrical distribution pattern as shown in Fig. 12. The height of the curved ridges 88 is about 10 mm, effective in preventing the dough from running idle relative to the mortar M.

The numeral 89 denotes a fluoride resin ring inserted at an intermediate height position in said lower rotary support bowl 71 and integrally joined thereto by a plurality of screws 90, said fluoride resin ring serving to prevent the release-purpose fluoride resin coating applied to the inner wall surface of the lower rotary support bowl 71 from peeling off owing to friction between it and a dough overturning resistance vane to be later described.

The numeral 91 denotes a cover flange of L-shaped cross section upwardly integrally projecting from the upper end of the lower rotary support bowl 71, said cover flange surrounding the parting line L-L associated with the upper fixed ring 70. The numeral 92 denotes an annular packing inserted between the joined surfaces of the upper fixed ring 70 and the lower rotary support bowl 71, sealing the parting line L-L against leakage of the material or water in the bread dough therethrough.

The lower rotary support bowl 71 is adapted to be driven for rotation around its vertical axis by a mortar driving motor 93 vertically installed on the installation machine frame F.

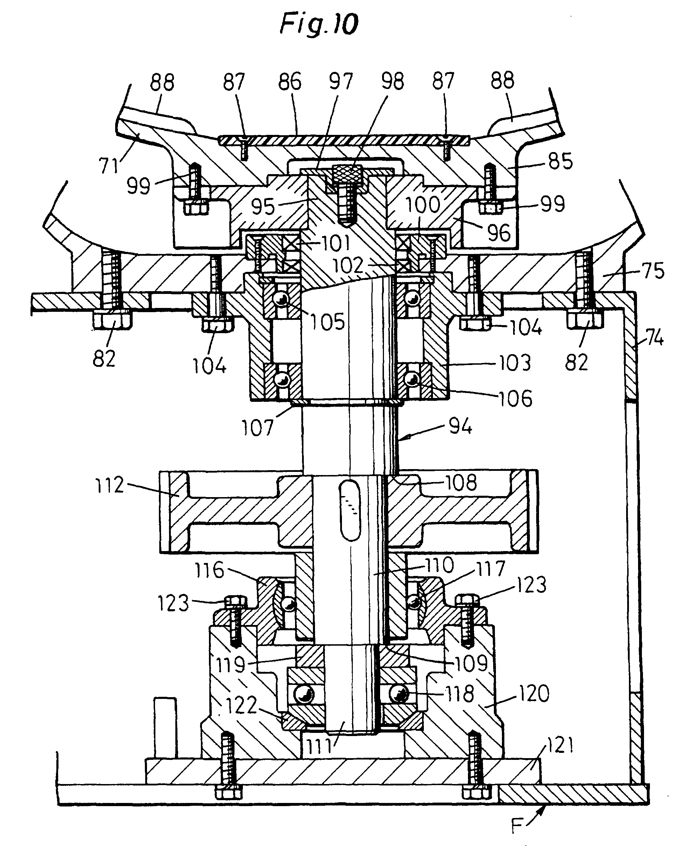

More particularly, in Figs. 9 and 10 showing a rotary drive system for the lower rotary support bowl 71 in the mortar M, the numeral 94 denotes a mortar rotating shaft vertically aligned with the pestle lifting shaft 33 and erected in the lower region of the machine frame F, and a rotary support disk 96 opposed to the attachment seat disk 85 of said lower rotary support bowl 71 is fitted on the small diameter shaft portion 95 in the upper end of said mortar rotating shaft and fixed in position through a collar 97 and bolt 98.

And the attachment seat disk 85 of the lower rotary support disk 71 and the rotary support disk 96 on the mortar rotating shaft 94 are joined together by a plurality of fixing bolts 99 so that they can be rotated as a unit. The numeral 100 denotes a fixed seal case positioned between the rotary support disk 96 and the support structure 75 and fitted on the mortar rotating shaft 94, with a pair of vertically spaced oil seals 101 and 102 fitted therein.

Further, the numeral 103 denotes a bearing case integrally fixed to the support structure 75 through a plurality of bolts 104 applied from below, said bearing case having a pair of vertically spaced radial bearings 105 and 106 installed therein to stably support the mortar rotating shaft 94. The numeral 107 denotes a stop ring for preventing the radial bearings 105 and 106 from slipping off.

The lower end portion of the mortar rotating shaft 94 has a pair of vertically spaced stopping step surfaces 108 and 109, providing a stepped configuration comprising a small diameter shaft portion 110 and a smallest diameter portion 111 extending downward therefrom.

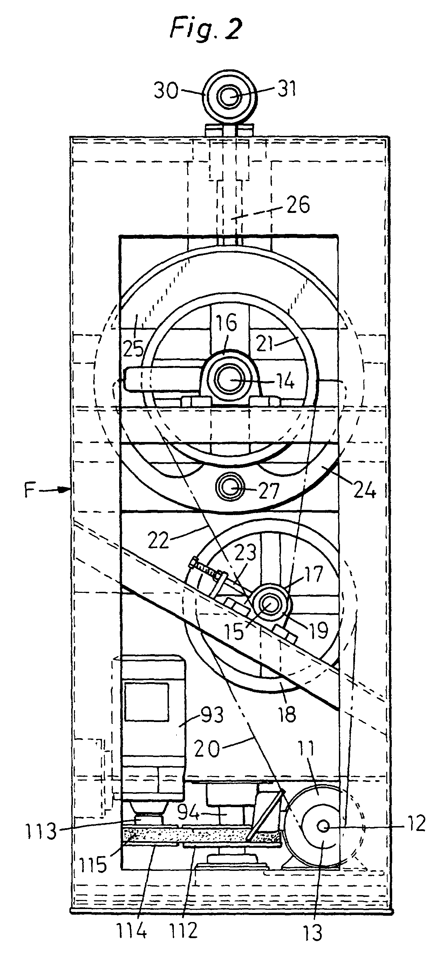

And a driven pulley 112 of large diameter fitted for integral rotation on the small diameter shaft portion 110 of the mortar rotating shaft 94 is on a level with and opposed to a driving pulley 114 fitted on the lower end portion of an output shaft 113 depending from said mortar driving motor 93, as shown in Figs. 1 and 2, with a transmission belt 115 entrained around a driving pulley 114 and a driven pulley 112.

The numeral 116 denotes a flange unit fitted on the small diameter shaft portion 110 of the mortar rotating shaft 94 and cooperating with the upper stopping step surface 108 of the mortar rotating shaft 94 to support the driven pulley 112, said flange unit having a radial bearing 117 installed therein to rotatably support the mortar rotating shaft 94.

The numeral 118 denotes a thrust bearing fitted on the smallest diameter shaft portion 111 of the mortar rotating shaft 94 through a distance collar 119, and a bearing case 120 therefor is fixed to the installation machine frame F by means of a base plate 121. The numeral 122 denotes a dish ring for preventing said thrust bearing 118 from slipping off, and 123 denotes fixing bolts for the flange unit 116 and bearing case 120.

The bread dough received in the mortar M which comprises the upper fixed ring 70 and the lower rotary support bowl 71 as described above is automatically pressed by the pestle P moving up and down by a given stroke S, the dough being subjected to a kneading action due to the pressing force, and during the rotation of the lower rotary support bowl 71, the dough collides with the dough overturning resistance vane W and is thereby forcibly overturned.

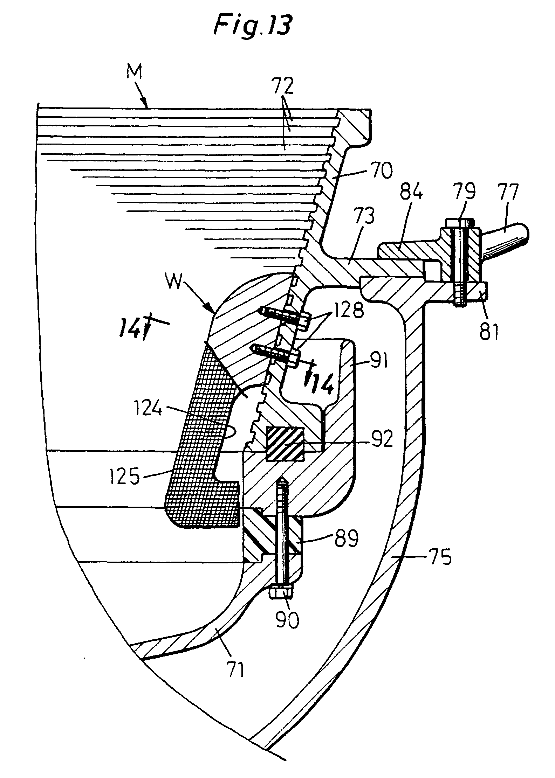

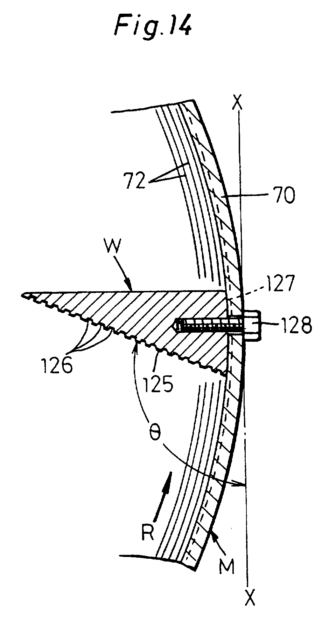

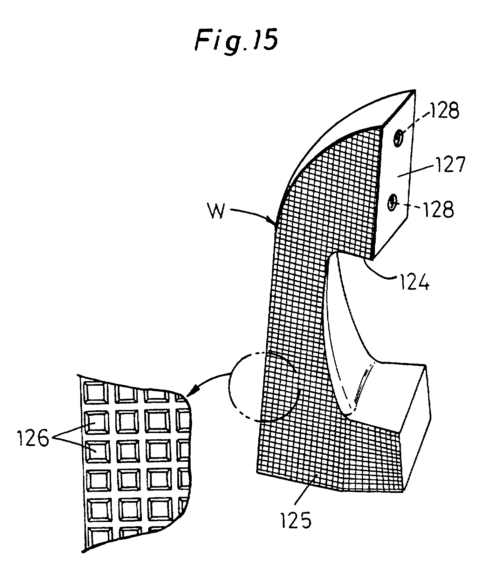

More particularly, the dough overturning resistance vane W, as is clear from Figs. 13 through 15, is substantially U-shaped in a front view with a notch 124 cut in an intermediate height position. Furthermore, it is substantially triangular in horizontal section, with its longer side serving as a dough overturning surface 125 and formed with lattice-like surface irregularities 126 serving as dough releasing means. The level difference in the surface irregularities 126 is about 0.5 mm. The numeral 127 denotes an attachment seat surface at which the resistance vane W is attached to the upper fixed ring 70 of the mortar M.

And the resistance vane W for overturning the dough is joined at its attachment seat surface 127 to the inner wall surface of the upper fixed ring 70 in such a manner as to straddle the parting line L-L between the upper fixed ring 70 and lower rotary support bowl 71 of said mortar M, said resistance vane being removably fixed in position by a plurality of screws 128. It is arranged that if the amount of material B received in the mortar M is relatively small, a corresponding resistance vane W may be substituted and attached in position.

In the attached state, the lower end portion of the resistance vane W extends downward along the inner wall surface of the rotary support bowl 71. In this case, however, they do not contact each other, so that the lower rotary support bowl 71 of the mortar M rotates without any trouble, of course.

In the attached state of the resistance vane W, at the fixing point at which the attachment seat surface 127 is fixed to the upper fixed ring 70, the angle θ which the dough overturning surface 125 forms with a tangent X-X to the path of rotation of the mortar M is set to an obtuse angle with due consideration given to the direction of rotation R of the lower rotary support bowl 71, so as to allow the bread dough to flow toward the center of the mortar M.

As a result, the pressing force from the pestle P moving up and down above the center of rotation of the mortar M can be applied equally to all the bread dough, so that all the dough can be efficiently uniformly kneaded in a short time. In addition, although only a single dough overturning resistance vane W has been installed and used in the basic embodiment, two or more may be installed.

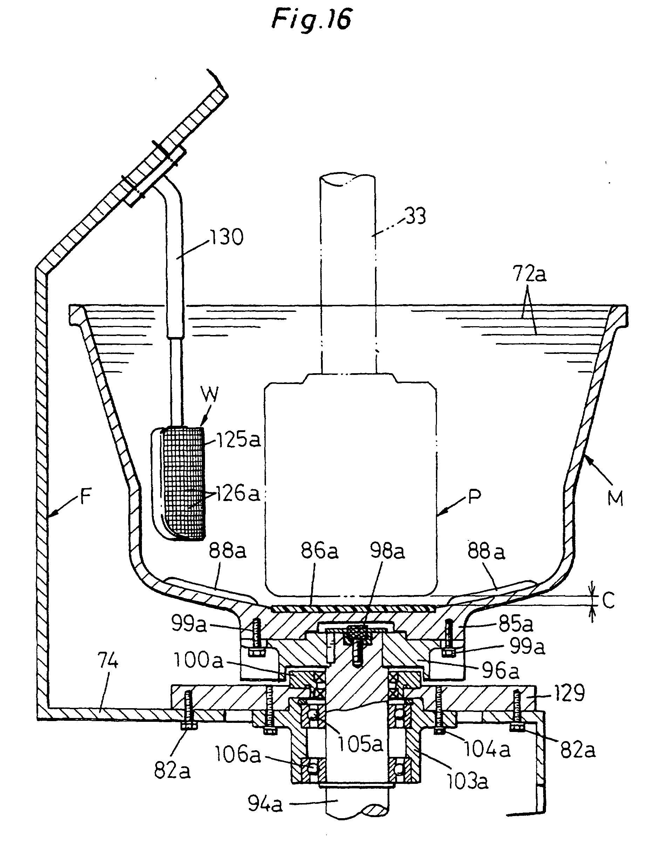

Further, in the basic embodiment shown in Figs. 1 through 15, the mortar M has been described of the type in which the lower rotary support bowl 71 alone is driven for rotation by the mortar driving motor 93. However, as is clear from a modified embodiment shown in Fig. 16 corresponding to Fig. 9, a mortar M may be formed as a single unit, and in the same manner as in Fig. 9, an attachment seat disk 85a at the central area of the bottom surface may be joined to a rotary support disk 96a on a mortar rotating shaft 94a by fixing bolts 99a, so that the mortar M may be driven for rotation in its entirety.

In that case, the entire inner wall surface of the mortar M is formed with dough releasing surface irregularities 72a which are then subjected to a fluoride resin coating treatment, and a dough overturning resistance vane W is fixed to the interior of the mortar M such that it is opposed thereto from above. The numeral 129 denotes a leg seat substituted for the support structure 75 described above, and 130 denotes a suspension arm for the resistance vane W, fixed to said installation machine frame F.

Though not shown, it would be contemplated to adjust the installation height of the resistance vane W according to the amount of material B received in the mortar M, or to rotate the resistance vane W in the direction opposite to the direction of rotation R of the mortar M.

In addition, the rest of the arrangement of the modified embodiment shown in Fig. 16 is substantially the same as in the basic embodiment described with reference to Figs. 1 through 15; therefore, corresponding reference characters obtained by adding the lowercase letter "a" to the reference characters used in Figs. 1 through 15 are entered in Fig. 16 and a detailed description thereof is omitted.

At any rate, the pestle P for pounding dough is moved up and down with respect to the center of rotation of the mortar M which is driven for rotation either in its entirety or partly at its lower rotary support bowl 71, 71a, applying a pressing force to the dough, with a given spacing C, which is about 10 mm at most, secured between the lower surface of the pestle P lowered, and the upper surface of the fluoride resin plate 86, 86a disposed on the inner bottom surface of the mortar M.

If the given spacing C is larger than about 10 mm, the pressing force will not work effectively on the dough even if the frequency and duration of pounding with the pestle P are increased.

In this respect, in the present invention since the pestle P is rotatably fitted on the lower end of the pestle lifting shaft 33 through the radial bearings 58, 59, the pestle P, when lowered, is freely rotated concomitantly with the mortar M through the dough nipped between the pestle P and the mortar M, so that there is no danger of excessively pressing the dough to the extent of rubbing it off and destroying the network structure of gluten, nor is the danger of strongly rubbing the dough to heat the latter. By setting the given spacing C to as small a value as about 10 mm or less, the intended kneading can be attained efficiently in a short time.

So long as the given spacing remains to be about 10 mm or less, it may be adjusted according to the amount of material B received in the mortar by lifting or lowering the upper end of the pestle lifting shaft 33 relative to the pivot shaft 31 to re-fix the split clamp elements 34 and 35. However, if the given spacing C is reduced to zero, the pestle P would collide with the mortar M when it is lowered and would cause the mortar to cease to rotate; therefore, said spacing C, even if slight, should be secured.

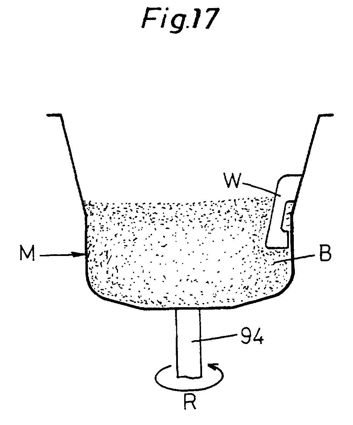

In the present invention, in mechanically preparing dough for bread using the bread dough preparing apparatus constructed in the manner described above, the material B including wheat flour, yeast, table salt, sugar, egg, oil and other ingredients of dough is received in the mortar M as shown in Fig. 17 and then water is added during the rotation of the mortar M, thereby mixing said material B and water. During this hydration and mixing, the pestle P is at rest in its upper dead point, not being in use yet.

The rotary speed of said mortar M is preferably constant, being about 90 rpm. Further, it is preferable that water amounting to about 65 - 80% by weight based on the amount of the wheat flour in the material B be added little by little from above the top-opened mortar M during the rotation of the latter.

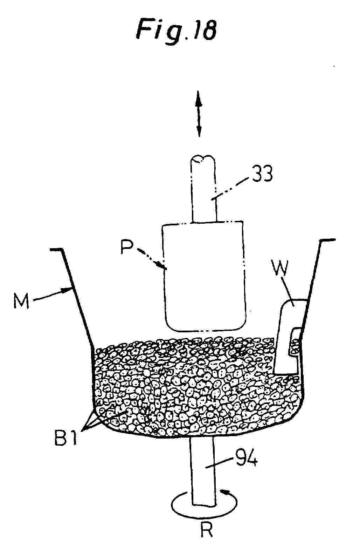

Then, the rotation of the mortar M combined with the action of overturning the dough by the resistance vane W opposed to the interior of the mortar efficiently accelerates the hydration and mixing of the wheat flour contained in said material B, causing the water to adhere uniformly to the surfaces of individual wheat flour particles and to be gradually absorbed by the latter, so that the material is formed into small masses B1 like finely minced boiled fish, as shown in Fig. 18.

Thus, while the mortar M is being rotated, the material B is repetitively pounded by the dough pounding pestle P moving up and down through a given stroke S, as suggested by chain lines in Fig. 18, whereby it is subjected to kneading. In this case, the speed of lifting and lowering movement of the pestle P is most effectively about 80 cycles per minute in consideration of the mortar M being rotated at a constant speed of about 90 rpm.

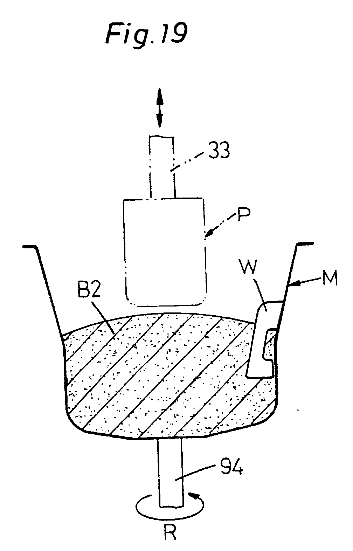

Then, the small masses B1 of said material B are rotated concomitantly with the mortar M during the rotation of the latter, thereby subjected to the overturning action of the dough overturning resistance vane W while they are uniformly pressed from above by the pestle P; therefore, the water adhering to their surfaces is pressed into the wheat flour particles, so that when the wheat flour particles have finally completely absorbed the water, the high viscoelasticity of the wheat flour is efficiently extracted, lumping the material into a single large mass B2, as shown in Fig. 19, thus providing dough of good quality for bread having a robust gluten network structure as a whole.

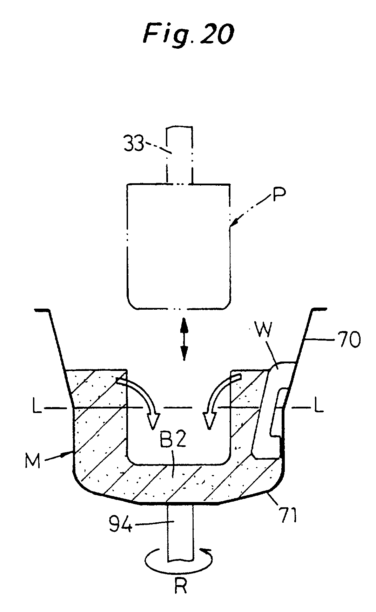

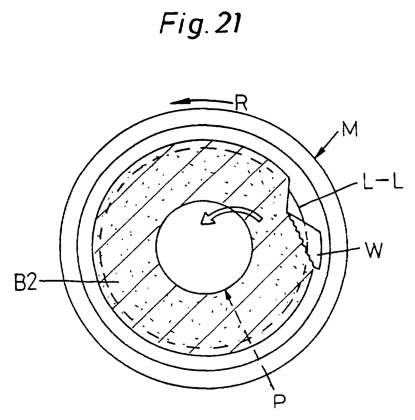

Particularly, in the case of using the mortar M having its lower rotary support bowl 71 alone adapted to be rotatable as described in the above basic embodiment, when the small masses B1 of the material B are pounded by the pestle P, as suggested from Figs. 20 and 21, the lower layer of the small masses B1 is rotated concomitantly with the lower rotary support bowl 71, whereas the upper layer does not undergo concomitant rotation but moves up and down, resulting in a movement, like slippage of strata, naturally taking place along the parting line L-L of the mortar M. Further, the upper layer of the dough falls for mixing into the central recess formed by the pestle P. Thus, since the dough in such mixed state is subjected to the pressing force from the pestle P, it is completely and efficiently kneaded, a more useful feature of the invention.

Further, the relative spacing C between the lower surface of the pestle P lowered and the upper surface of said fluoride resin plate 86 is set to as small as about 10 mm at most; this setting lends itself to imparting a strong pressing force from the pestle P to the dough. Thus, the kneading time for a given amount of material B can be shortened, a fact which, coupled with the smooth transition from the hydration and mixing action to the kneading action, contributes to the economies of volume production of dough for bread.

In this connection, it is to be pointed out that the powerful pressing force from the pestle P, coupled with the rotating mortar M, would be liable to act as a force which rubs off the dough nipped in the given spacing C or a friction force which heats the bread dough. In this respect, however, in the present invention, it is not until the pestle P comes down that the pestle P is rotated concomitantly with the dough nipped between it and the mortar M, with the result that even if the dough is subjected to a powerful pressing force from the pestle P, the resulting rubbing force or friction force on the dough escapes by itself, so that there is no danger of destroying the gluten network structure during kneading nor is the danger of heating the dough to a high temperature. This effect, coupled with the fact that the mortar M is open all the time, makes it possible to keep the kneading temperature at about 20 - 30° C at which yeast works vigorously.

And the surface of the finished bread dough has a bulge as if it were a rubber balloon starting to elastically inflating and also has even luster, and the dough is also given fluidity which ensures a smooth transition to the subsequent primary fermentation.

Further, in the mortar M shown in Figs. 1 through 13, since the inner bottom surface of the lower rotary support bowl 71 is roughened by dough slippage-preventing curved ridges 88, the single large mass B2 converted from a group of small masses B2 of the material B cannot run idle relative to the mortar M but is rotated concomitantly with the mortar M without fail. While the dough is subjected to the dough overturning action of the resistance vane W, the air staying in the furrows included in the surface irregularities 72 formed in the inner wall surface of the upper fixed ring 70 eliminates the danger of the dough sticking to the inner wall surface of the upper fixed ring 70 or to the inner bottom surface of the lower rotary support bowl 71.

Such dough releasing action is also exerted by the surface irregularities 126 formed in the dough overturning surface 125 of the dough overturning resistance vane W, fluoride resin plate 86 of the rotary support bowl 71, and the fluoride resin coating film 69 on the pestle P. Therefore, the operation of taking out the finished bread dough and cleaning the mortar M and resistance vane W can be easily performed.

In this connection, about 4 kg of material B was put in the mortar M of the apparatus in which the given relative spacing C associated with the pestle P was about 6 mm, and then about 75% by weight of water based on the amount of the wheat flour in the material B was added. While the mortar M was rotated at a constant speed of about 90 rpm, the pestle P was moved up and down at a rate of about 80 strokes per minute. The time was measured which was needed from the time the initial hydration and mixing shown in Fig. 17 started till the kneading shown in Figs. 18 and 19 ended, leaving finished dough for bread behind. It was found that the time expended was about 10 minutes at most. Further, the temperature upon completion of kneading of dough for bread was measured and found to be about 26 ° C.

Thus, in a shorter time with higher efficiency than in the case of the conventional bread dough preparing apparatus, dough for bread of the same quality as or higher quality than that of dough for bread hand-made by a skilled person has been prepared. Further, the weight percentage of water based on the amount of the wheat flour in the material B can be easily increased. As a result, dough for bread of high yield is obtained.

In addition, the hydration and mixing of the material B may be effected separately from the rotation of the mortar M so as to prepare either small masses B1 like finely minced boiled fish or a large mass B2, the same being then received in the mortar M and pounded by the pestle P during the rotation of the mortar M; thus, the kneading operation alone can be automatically mechanically effected by the bread dough preparing apparatus according to the present invention.

As has been described so far, a bread dough preparing apparatus according to the invention comprises a mortar M adapted to receive a material B including wheat flour, yeast, table salt and other necessary ingredients of dough and water, said mortar being driven for rotation in its entirety or partly at its lower portion alone by a mortar driving motor 93 housed in an installation machine frame F, a dough overturning resistance vane W opposed to the interior of the mortar M so as to overturn the dough, a pestle lifting shaft 33 driven by a separate pestle driving motor 11 housed in the installation machine frame F to be moved through crank motion toward the mortar M by a given stroke S, a pestle P freely rotatably fitted on the lower end portion of said pestle lifting shaft 33 through bearings 58, 59 to pound the dough received in said mortar M, the arrangement being such that when said pestle P is lowered, it is rotated concomitantly with the dough nipped in the vertical relative spacing C defined between the pestle P and the mortar M. Therefore, a combination of the rotary movement of said mortar M and the dough overturning action of the resistance vane W opposed to the interior thereof effectively accelerates the hydration and mixing of the wheat flour in the material B, making the material B formed into small masses B1 like finely minced boiled fish efficiently in a short time. And the pestle P is lifted and lowered during the rotation of the mortar M so as to pound the small masses B1, thereby lumping them into a single large mass B2 as a whole. The transition to kneading is very smooth and hence a given amount of bread dough can be efficiently prepared.

Particularly, the pestle P for kneading said dough, in the case of the present invention, is freely rotatably fitted on the lower end portion of the pestle lifting shaft 33 through bearings 58 and 59, so that when the pestle P is lowered, it is rotated concomitantly with the dough nipped between the pestle P and the mortar M. Therefore, the pressing force from the pestle P does not work as a rubbing force or friction force on the dough, so that there is no danger of destroying the gluten network structure or heating the dough to high temperatures during the kneading with said pestle P. Thus, there is a merit that dough for bread of the same quality as or higher quality than that of dough hand-made by a skilled person can be prepared.

Thus, it is also possible to employ an arrangement described in Claim 2. More particularly, the pressing force produced by the pestle P on dough can be increased by setting the vertical relative spacing C between the lower surface of the pestle P lowered and the inner bottom surface (of the fluoride resin plate (86, 86a)) to as small as about 10 mm at most, a fact which, coupled with the fact that the transition from hydration and mixing of dough to subsequent kneading can be smoothly effected, a given amount of dough for bread can be prepared efficiently in a short time; thus the invention is superior in the economies of volume production.

If the arrangement described in Claim 3 is employed in fitting the pestle P on the lower end portion of the pestle lifting shaft 33, the pestle P in the form of an assembly of the barrel sleeve 65 and bearing case 50 can be efficiently fitted on the lower end portion of the pestle lifting shaft 33.

Furthermore, the radial bearings 58 and 59 interposed between the fitting surfaces of the bearing case 50 and the pestle lifting shaft 33 enable the pestle P to freely rotate around the vertical axis of the pestle lifting shaft 33. The thrust bearings 54 and 56 interposed between the fitting surfaces make it possible to rationally support the thrust load on the pestle P, increasing the durability of the pestle P.

Further, the fluoride resin coating film 69 integrally applied to the entire surface of the barrel sleeve 65 prevents dough from sticking to the pestle P.

Further, if the arrangement described in Claim 4 is employed, a plurality of ridges 88, 88a raised a given height from the peripheral area of the mortar M make it possible to prevent the single large lumped mass B2 from running idle relative to the mortar M and enable the dough overturning action of the resistance vane W to work on the dough in its entirety, resulting in helping the kneading action of the pestle P to work uniformly and efficiently on the dough.

Further, since the fluoride resin plate 86, 86a is applied to the central area of the inner bottom surface of the mortar M and surface irregularities 72, 72a also to the inner bottom surface of the mortar M and since surface irregularities 126, 126a are also applied to the dough overturning surface 125, 125a of the resistance vane W opposed to the interior of the mortar M, the possibility of dough sticking to these surfaces is eliminated, and the cleaning operation and the operation of taking out finished dough for bread can be performed with ease.

## Claims

1. A bread dough preparing apparatus comprising;
a mortar (M) adapted to receive a material (B) including wheat flour, yeast, table salt and other necessary ingredients of dough and water, said mortar being driven for rotation in its entirety or partly at its lower portion alone by a mortar driving motor (93) housed in an installation machine frame (F),
a dough overturning resistance vane (W) opposed to the interior of the mortar (M) so as to overturn the dough,
a pestle lifting shaft (33) driven by a separate pestle driving motor (11) housed in the installation machine frame (F) to be moved through crank motion toward the mortar (M) by a given stroke (S),
a pestle (P); the apparatus being **characterized in that** the pestle (P) is freely rotatably fitted on the lower end portion of said pestle lifting shaft (33) through bearings (58, 59) to pound the dough received in said mortar (M),
the arrangement being such that when said pestle (P) is lowered, it is rotated concomitantly with dough nipped in a vertical relative spacing (C) defined between the pestle (P) and the mortar (M).

2. A bread dough preparing apparatus as set forth in Claim 1, **characterized in that** the vertical relative spacing (C) between the pestle (P) lowered and the mortar (M) is set to about 10 mm at most.

3. A bread dough preparing apparatus as set forth in Claim 1,**characterized in that** the dough pounding pestle (P) is an assembly of a bearing case (50) fitted on the pestle lifting shaft (33) such that it is prevented from slipping off, and a barrel sleeve (65) of substantially U-shaped cross section fixed from below on said bearing case in such a manner as to enclose the lower end portion of said pestle lifting shaft (33),
a barrel sleeve (65) having integrally applied to the entire surface thereof a fluoride resin coating film (69) serving as a release agent for dough, and
radial bearings (58, 59) and thrust bearings (54, 56) are interposed between the fitting surfaces of said pestle lifting shaft (33) and the bearing case (59).

4. A bread dough preparing apparatus as set forth in Claim 1,**characterized in that** a fluoride resin plate (86, 86a) is fixed on the central area of the inner bottom surface of the mortar (M) and a plurality of dough slippage preventing ridges (88, 88a) are formed on the peripheral region of said inner bottom surface in a radial symmetrical distribution pattern, and
the inner bottom surface of said mortar (M) and the dough overturning surface (125, 125a) of the dough overturning vane (W) are roughened by applying surface irregularities (72, 72a) (126, 126a) thereto which serve as dough releasing means.

## Patentansprüche

1. Brotteigzubereitungseinrichtung, umfassend:
eine Reibschale (M) , die dazu geeignet ist, ein Material (B) aufzunehmen, das Weizenmehl, Hefe, Tafelsalz und andere notwendige Zutaten von Teig sowie Wasser enthält, wobei die Reibschale zur Rotation in ihrer Gesamtheit oder partiell in ihrem unteren Teil allein mittels eines Reibschalenantriebsmotors (93) angetrieben wird, der in einem Installationsmaschinenrahmen (F) untergebracht ist,
einen Teigumstürzwiderstandsflügel (W), der dem Inneren der Reibschale (M) so gegenüber gestellt ist, dass er den Teig umstürzt,
eine Stempelhebewelle (33), die mittels eines separaten Stempelantriebsmotors (11), der in dem Installationsmaschinenrahmen (F) untergebracht ist, angetrieben wird, um durch Kurbelbewegung um einen gegebenen Hub (S) nach der Reibschale (M) zu bewegt zu werden,
einen Stempel (P), wobei die Einrichtung **dadurch gekennzeichnet, dass** der Stempel (P) frei drehbar auf dem unteren Endteil der Stempelhebewelle (33) durch Lager (58, 59) zum Stampfen des in der Reibschale (M) aufgenommenen Teigs angebracht ist,
wobei die Anordnung derart ist, dass, wenn der Stempel (P) abgesenkt wird, er gleichzeitig mit Teig rotiert wird, welcher in einem vertikalen relativen Zwischenraum bzw. Abstand (C), der zwischen dem Stempel (P) und der Reibschale (M) begrenzt ist, eingeklemmt ist.

2. Brotteigzubereitungseinrichtung nach Anspruch 1, **dadurch gekennzeichnet, dass** der vertikale relative Zwischenraum bzw. Abstand (C) zwischen dem abgesenkten Stempel (P) und der Reibschale (M) auf höchstens etwa 10 mm eingestellt ist.

3. Brotteigzubereitungseinrichtung nach Anspruch 1, **dadurch gekennzeichnet, dass** der Teigstampfstempel (P) ein Aufbau ist aus einem Lagergehäuse (50), das auf der Stempelhebewelle (33) derart angebracht ist, dass es am Herunterrutschen gehindert wird, und einer Trommelhülse (65) von im Wesentlichen U-förmigen Querschnitt, die von unten her auf bzw. an dem Lagergehäuse in einer solchen Art und Weise befestigt ist, dass sie den unteren Endteil der Stempelhebewelle (33) einschließt bzw. umschließt,
einer Trommelhülse (65), die an der gesamten Oberfläche derselben integral einen Fluoridharzbeschichtungsfilm (69) aufgebracht hat, der als ein Freigebmittel für Teig dient, und
wobei Radiallager (58, 59) und Axiallager (54, 56) zwischen die Anbringungsoberflächen der Stempelhebewelle (33) und das Lagergehäuse (59) zwischengefügt sind.

4. Brotteigzubereitungseinrichtung nach Anspruch 1, **dadurch gekennzeichnet, dass** eine Fluoridharzplatte (86, 86a) auf dem mittigen Bereich der inneren Bodenoberfläche der Reibschale (M) befestigt ist und eine Mehrzahl von Teigrutschverhinderungsrippen (88, 88a) auf dem Umfangsbereich der inneren Bodenoberfläche in einem radialsymmetrischen Verteilungsmuster ausgebildet sind, und
die innere Bodenoberfläche der Reibschale (M) und die Teigumstürzoberfläche (125, 125a) des Teigumstürzflügels (W) durch Auf- bzw. Anbringung von Oberflächenunregelmäßigkeiten (72, 72a) (126, 126a) darauf bzw. daran, welche als Teigfreigebemittel dienen, aufgeraut sind.

## Revendications

1. Appareil de préparation de pâte à pain comprenant :
un mortier (M) prévu pour recevoir une matière (B) incluant de la farine de blé, de la levure, du sel de table et d'autres ingrédients nécessaires de la pâte ainsi que de l'eau, ledit mortier étant entraîné en rotation dans sa totalité ou partiellement à sa partie inférieure seule par un moteur d'entraînement de mortier (93) logé dans un bâti de machine d'installation (F), une palette à résistance de retournement de pâte (W) opposée à l'intérieur du mortier (M) de façon à retourner la pâte,
un arbre de soulèvement de pilon (33) entraîné par un moteur séparé (11) d'entraînement de pilon, logé dans le bâti de machine d'installation (F) de manière à être déplacé suivant un mouvement de manivelle vers le mortier (M) suivant une course donnée (S),
un pilon (P) ;
l'appareil étant **caractérisé en ce que** le pilon (P) est monté en rotation libre sur la partie d'extrémité inférieure dudit arbre de soulèvement de pilon (33) par l'intermédiaire de paliers (58,59) afin de pétrir la pâte reçue dans ledit mortier (M),
l'agencement étant tel que, lorsqu'on abaisse le pilon (P), on le fait tourner en même temps, la pâte étant pincée dans un espacement vertical relatif (C) défini entre le pilon (P) et le mortier (M).

2. Appareil de préparation de pâte à pain selon la revendication 1, **caractérisé en ce que** l'espacement vertical relatif (C) entre le pilon (P) abaissé et le mortier (M) est réglé à 10mm environ au plus.

3. Appareil de préparation de pâte à pain selon la revendication 1, **caractérisé en ce que** le pilon de pétrissage de pâte (P) est un dispositif comprenant un corps de palier (50) monté sur l'arbre de soulèvement de pilon (33) de sorte qu'il est empêché de se détacher, et un manchon de chemisage (65) à section transversale sensiblement en forme de U fixé par dessoussur ledit corps de palier de manière à entourer la partie d'extrémité inférieure dudit arbre de soulèvement de pilon (33),
un manchon de chemisage (65) comporte, solidairement appliqué à toute sa surface, un film de revêtement en résine fluorée (69) servant d'agent anti-adhérence pour la pâte, et
des portées radiales (58, 59) et des portées de butée (54, 56) sont interposées entre les surfaces de montage dudit arbre de soulèvement de pilon (33) et du corps de palier (59).

4. Appareil de préparation de pâte à pain selon la revendication 1, **caractérisé en ce qu'**une plaque de résine fluorée (86 ; 86a) est fixée sur la région centrale de la surface inférieure intérieure du mortier (M) et une pluralité de nervures (88, 88a) empêchant le glissement de la pâte sont formées sur la région périphérique de ladite surface inférieure intérieure suivant une configuration de distribution symétrique radiale, et la surface inférieure intérieure dudit mortier (M) et la surface de retournement de pâte (125, 125a) de la palette de retournement de pâte (W) sont rendues rugueuses par application d'irrégularités de surface (72, 72a) (126, 126a) à ces surfaces, ces irrégularités servant de moyens de détachement de la pâte.
